# EUROPEAN PATENT APPLICATION

(11) **EP 3 128 277 A1**
(43) Date of publication of application: **08.02.2017**
(21) Application number: 16182546.8
(22) Date of filing: 03.08.2016
(51) Int. Cl.: F28D 1/053, F28F 17/00, F28F 1/12, B60H 1/32

(54) **EVAPORATOR HAVING VERTICAL ARRANGEMENT OF HEADER PIPE FOR VEHICLE AIR CONDITIONER**

(30) Priority: 03.08.2015 KR 20150109551
(71) Applicant: DongHwan Ind. Corp., Seoul (KR)
(72) Inventor: Ko, Dong Hwan, Gyungsangnam-do (KR)
(74) Representative: Grünecker Patent- und Rechtsanwälte PartG mbB

(57) **Abstract**

The present invention provides an evaporator having a vertical arrangement of header pipes for a vehicle air conditioner, the evaporator including: a pair of header pipes disposed to face each other with a gap therebetween, providing a circulation path for a coolant supplied in the cooling cycle, and discharging the coolant that has exchanged heat; a plurality of tubes laterally arranged between the pair of header pipes to communicate with the header pipes, connected in a longitudinal direction of the header pipes, and allowing a coolant flowing inside through inlets of the header pipes to exchange heat with air while flowing in a zigzag pattern toward outlets of the header pipes; and heat-dissipating fins disposed among the tubes and dissipating heat of vaporization from the tubes while passing the air supplied from the fan.

## Description

### BACKGROUND OF THE INVENTION

### Field of the Invention

The present invention relates to an evaporator of an air conditioner and, more particularly, to an evaporator for a vehicle air conditioner wherein the evaporator has a large heat transfer area compared with existing evaporators by vertically arranging header pipes.

### Description of the Related Art

In general, vehicles are equipped with an air-conditioning system for supplying fresh air into the interior, which is contaminated by the breath of passengers, the external atmospheric state, and a change in temperature of the external air, and for maintaining a pleasant internal environment by keeping the interior temperature at a level suitable for the bodies of passengers.

These air-conditioning systems supply hot air by sending cooling water heated by an engine through a heater core to exchange heat with air from a fan in a heating process and supply cold air by cooling air from the fan through an evaporator included in a cooling cycle using a coolant in a process of cooling.

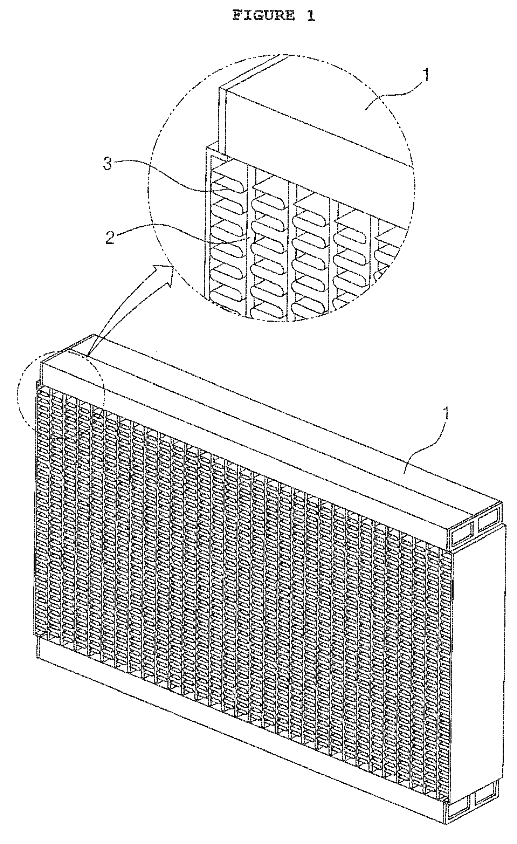

In general, an evaporator, as shown in FIG. 1, includes a pair of header pipes 1 through which a coolant is circulated and supplied, tubes 2 that are connected to the heat pipes 1 and guide the coolant in a zigzag pattern for heat exchange with air, and heat-dissipating fins 3 that are disposed among the tubes 2 to increase a heat exchange area.

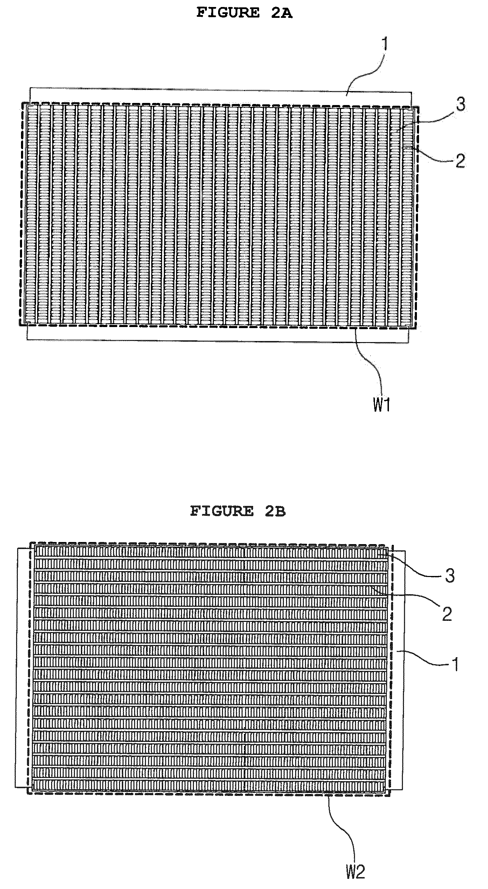

Common automotive air-conditioning units are formed to receive a rectangular evaporator, so, as shown in FIGS. 2A and 2B, evaporators are generally formed in a laterally long rectangular shape.

The evaporator formed in a rectangular shape has a larger heat transfer area W2 when the header pipes 1 are vertically arranged, as in FIG. 2B, than a heat exchange area W1 when the head pipes 1 are horizontally arranged, as in FIG. 2A.

This is because the portions where the tubes 2 are arranged provide the entire heat exchange area in the evaporator, so the smaller the area of the header pipes 1 occupy, the larger the heat transfer area.

That is, the longer the header pipes 1 extend horizontally, the smaller the heat transfer area for heat exchange provided by the tubes 2.

**[Table 1]**

| | | | | | | | | | |
|---|---|---|---|---|---|---|---|---|---|
| 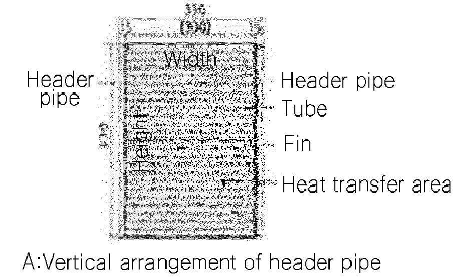 | | | | | 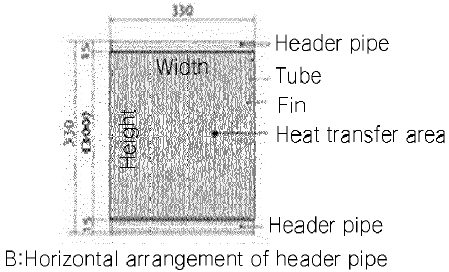 | | | | |

| Aspect ratio | Length (mm) | | | Heat transfer area (mm²) A= (ⓐ) ×ⓑ Dimension except width of header pipe | Length (mm) | | | Heat transfer area (mm²) B=ⓒ×(ⓓ) Dimension except width of header pipe | Difference of heat transfer area (mm²) A-B |
|---|---|---|---|---|---|---|---|---|---|
| | (ⓐ) width () is Dimension except width of header pipe | | ⓑ Height | | ⓒ Width | (ⓓ) Height () is Dimension except width of header pipe | | | |
| 0.4:1 | 330 | (30 0) | 750 | **225,000** | 330 | 750 | (72 0) | **237,600** | **-12,600** |
| 0.6:1 | 330 | (30 0) | 510 | **153,000** | 330 | 510 | (48 0) | **158,400** | **-5,400** |
| 0.8:1 | 330 | (30 0) | 390 | **117,000** | 330 | 390 | (36 0) | **118,800** | **-1,800** |
| 0.9:1 | 330 | (30 0) | 360 | **108,000** | 330 | 360 | (33 0) | **108,900** | **-900** |
| 1:1 | 330 | (30 0) | 330 | **99,000** | 330 | 330 | (30 0) | **99,000** | **0** |
| 1.2:1 | 330 | (30 0) | 280 | **84,000** | 330 | 280 | (25 0) | **82,500** | **1,500** |
| 1.4:1 | 330 | (30 0) | 240 | **72,000** | 330 | 240 | (21 0) | **69,300** | **2,700** |
| 1.6:1 | 330 | (30 0) | 210 | **63,000** | 330 | 210 | (18 0) | **59,400** | **3,600** |
| 1.8:1 | 330 | (30 0) | 180 | **54,000** | 330 | 180 | (15 0) | **49,500** | **4,500** |
| 2.2:1 | 330 | (30 0) | 150 | **45,000** | 330 | 150 | (12 0) | **39,600** | **5,400** |
| 2.4:1 | 330 | (30 0) | 140 | **42,000** | 330 | 140 | (11 0) | **36,300** | **5,700** |
| 3.0:1 | 330 | (30 0) | 110 | **33,000** | 330 | 110 | (80 ) | **26,400** | **6,600** |

In detail, referring to Table 1, when the aspect ratio of the evaporator is 1:1, the vertical arrangement and the horizontal arrangement both have the same heat transfer area, but if the width of a rectangle is increased, a large heat transfer area is obtained when header pipes are vertically arranged.

For example, assuming that an evaporator having an aspect ratio of 3.0:1 (330mm width and 110mm height) is provided, when header pipes are vertically arranged, the heat transfer area is 300mm × 110mm = 33,000mm² except the thicknesses of the header pipes.

However, when header pipes are horizontally arranged, the heat transfer area is 330mm × 80mm = 26,400mm² except the thicknesses of the header pipes. Accordingly, when the header pipes are vertically arranged, the heat transfer area is 6,600mm² larger.

The evaporator circulates a coolant at lower temperature through the tubes 2 to exchange heat with air, so the air condensates into water on the surfaces of the tubes 2 or the heat-dissipating fins 3.

Accordingly, existing evaporators have a limit that the tubes 2 have to be vertically arranged, as shown in FIG. 1.

In detail, since the tubes 2 and the heat-dissipating fins 3 are vertically arranged in the evaporator, the condensate water produced on the surfaces of the tubes 2 and the heat-dissipating fins 3 is dropped and removed in the longitudinal direction of the tubes 2 and the heat-dissipating fins 3. However, when the tubes 2 and the heat-dissipating fins 3 are horizontally arranged, condensate water is not removed but is scattered with cold air by the force generated by the fan, so the tubes 2 should be vertically arranged.

Therefore, since tubes and heat-dissipating fins are only vertically arranged in the existing evaporators to discharge condensate water produced on the surfaces of the tubes and heat-dissipating fins, it is difficult to increase the heat transfer area for the same entire area.

### Documents of Related Art

(Patent Document 1) Korean Patent Application Publication No. 10-2012-0037617

### SUMMARY OF THE INVENTION

The present invention has been made in an effort to solve the problems and an object of the present invention is to provide an evaporator for a vehicle air conditioner whereby the evaporator can maximize a heat transfer area by having a rectangular shape with a large aspect ratio and including vertically arranged header pipes and horizontally arranged tubes.

Another object of the present invention is to provide an evaporator for a vehicle air conditioner whereby the evaporator can prevent scattering of condensate water by a fan even in a horizontal arrangement of tubes by collecting and dropping condensate water discharged by cold air by force generated by the fan.

In order to achieve the above object, according to one aspect of the present invention, there is provided an evaporator having a vertical arrangement of header pipes for a vehicle air conditioner which is connected to a cooling cycle of the air conditioner and provides cold air through heat exchange between a coolant flowing through the evaporator and air supplied by a fan. The evaporator includes: a pair of header pipes disposed to face each other with a gap therebetween, providing a circulation path for a coolant supplied in the cooling cycle, and discharging the coolant that has exchanged heat; a plurality of tubes laterally arranged between the pair of header pipes to communicate with the header pipes, connected in a longitudinal direction of the header pipes, and allowing a coolant flowing inside through inlets of the header pipes to exchange heat with air while flowing in a zigzag pattern toward outlets of the header pipes; and heat-dissipating fins disposed among the tubes and dissipating heat of vaporization from the tubes while passing the air supplied from the fan, in which the header pipes are vertically disposed, the tubes are horizontally stacked, and the tubes are longer than the header pipes, thereby forming a rectangular shape.

The evaporator may further include a drain guide disposed close to the tubes, opposite to the fan, and blocking and guiding down condensate water produced on surfaces of the tubes or the heat-dissipating fins and scattered away from the fan by force generated by the fan.

The drain guide may include: guide bodies vertically disposed at sides of the tubes with regular intervals therebetween and providing channels for cold air passing by the tubes and heat-dissipating fins through spaces among the guide bodies; and baffle boards protruding on both sides of the guide bodies alternately in the spaces among the guide bodies and collecting and dropping condensate water included in cold air under the guide bodies by alternately blocking the cold air flowing through the spaces.

The guide bodies may each have bending portions forming inclined surfaces in a zigzag pattern in a flow direction of the cold air and alternately change the flow direction of the cold air, and the baffle boards may protrude at the bending portions.

The baffle boards may protrude at the same angle as the inclined surfaces formed by the bending portions of the guide bodies

The drain guide may further include a condensate water filter fixed to exit ends of the guide bodies, covering exits of the channels, and filtering condensate water remaining in the cold air.

According to the evaporator having a vertical arrangement of header pipes for a vehicle air conditioner of the present invention, since the tubes are horizontally arranged, it is possible to maximize a heat transfer area from the same area of the entire evaporator and to provide the maximum efficiency of heat exchange at the same level.

Further, the guide bodies of the drain guide provide channels for cold air and the baffle boards, and collect and drop condensate water included in cold air by blocking the cold air, so it is possible to prevent condensate water produced on the surfaces of the tubes from scattering.

Therefore, since scattering of condensate water is provided even though tubes are horizontally arranged, it is possible to manufacture an evaporator without a limitation on the arrangement direction of tubes.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a perspective view showing a common evaporator;
FIGS. 2A and 2B are front views showing a rectangular shape of the evaporator;
FIG. 3 is an entire perspective view showing an evaporator having a vertical arrangement of header pipes for a vehicle air conditioner according to the present invention;
FIG. 4 is an exploded perspective view showing the evaporator having a vertical arrangement of header pipes for a vehicle air conditioner according to the present invention;
FIG. 5 is a plan view showing the configuration of the present invention;
FIGS. 6A and 6B are plan views showing examples of a drain guide of the present invention; and
FIG. 7 is a perspective view showing another embodiment of the present invention.

### DETAILED DESCRIPTION OF THE INVENTION

Exemplary embodiments of the present invention will be described more fully hereinafter with reference to the accompanying drawings. In the following description of the present invention, detailed descriptions of known functions and components incorporated herein will be omitted.

Embodiments of the present invention may be changed and modified in various ways, so that specific embodiments are shows in the drawings as examples and will be described in detail in this specification or application. However, it should be understood that embodiments according to spirit of the present invention are not limited to the specific embodiments, but include all modifications, equivalents, and substitutions included in the spirit and the scope of the present invention.

It should be understood that when one element is referred to as being "connected to" or "coupled to" another element, it may be connected directly to or coupled directly to another element or be connected to or coupled to another element, having the other element intervening therebetween. On the other hand, it is to be understood that when one element is referred to as being "connected directly to" or "coupled directly to" another element, it may be connected to or coupled to another element without the other element intervening therebetween. Other expressions describing the relationships of components, that is, "between" and "directly between", or "close to" and "directly close to" should be understood in the same way.

Terms used in the present specification are used only in order to describe specific exemplary embodiments rather than limiting the present invention. As used herein, the singular forms are intended to include the plural forms as well, unless the context clearly indicates otherwise. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

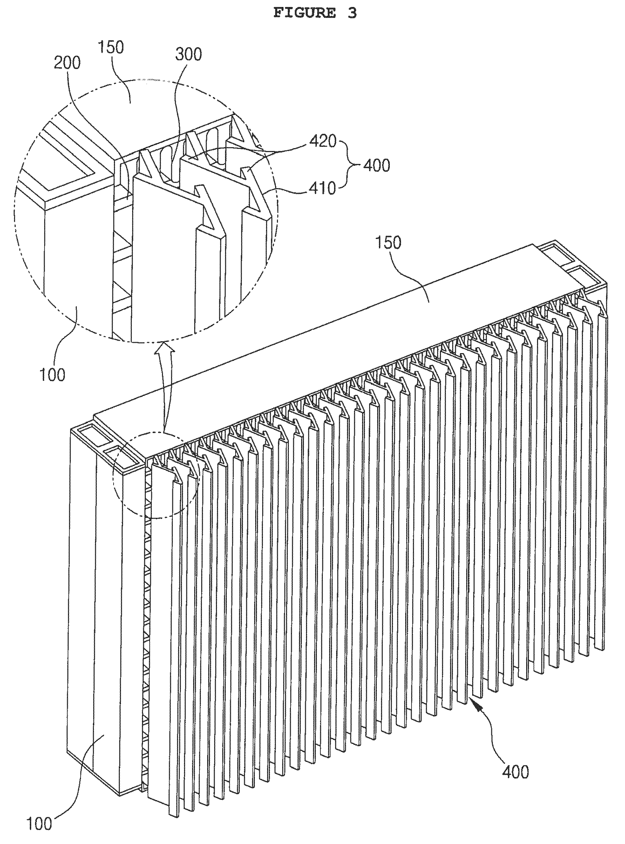

An evaporator having a vertical arrangement of header pipes for a vehicle air conditioner according to the present invention, as shown in FIG. 3, may include header pipes 100, tubes 200, and heat-dissipating fins 300.

The header pipes 100, which are parts for providing circulation paths of a coolant for heat exchange, are connected to an automotive cooling cycle (not shown), so a coolant at low temperature and low pressure flows into the header pipes 100 and is then discharged after exchanging heat with air supplied by a fan.

That is, the header pipes 100 are pipes and arranged to face each other, as shown in FIG. 3, and a coolant flows inside through a first side, moves to a second side through the tubes 200 to be described below, exchanges heat with air, and is then discharged to the cooling cycle.

An inlet and an outlet for the coolant are not shown in the figures.

The header pipes 100 each may be divided, depending on capacity, and have a separator therein by which the coolant flows to the second side through the separators.

Further, the header pipes 100 may be formed such that the number of tubes 200 through which the coolant flowing inside flows to the second side is gradually increased when the coolant is circulated.

For example, the header pipes 100 may be formed such that a coolant flowing to the first side flows to the second side through two tubes 200, returns to the first side through three tubes 200, and then flow back to the second side through four tubes 200.

This is for inducting a smooth phase change of the coolant by gradually increasing the heat exchange area of the coolant.

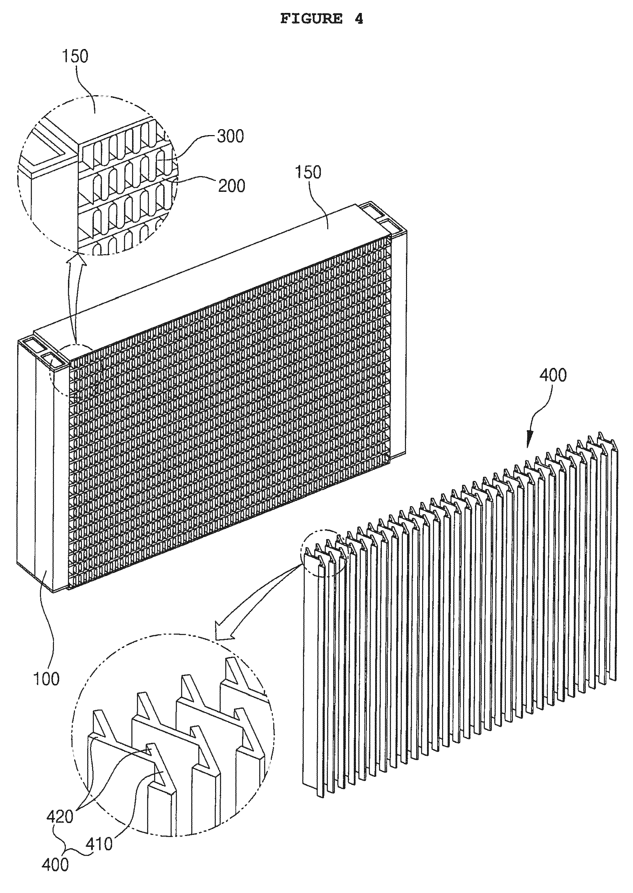

The tubes 200 are laterally arranged between the pair of header pipes 100 to communicate with the header pipes 100, as show in FIG. 4, in order that the coolant flows in a zigzag pattern and cools the air supplied by the fan by exchanging heat with the air.

The number of the tubes 200 may be changed in accordance with evaporation load, and as shown in FIG. 3, the top may be covered and protected by a reinforcing plate 150.

The evaporator of the present invention, as shown in FIG. 4, has a rectangular structure that has a width larger than the height and in which the tubes 200 are horizontally arranged and the header pipes 100 are vertically arranged.

Accordingly, the evaporator of the present invention can have a large heat transfer area, as compared with the case with header pipes 100 horizontally arranged, as described above with reference to Table 1.

The heat-dissipating fins 300, as shown in FIG. 3, are disposed among the tubes 200 in contact with them and transmit heat of vaporization from the tubes 200 to air.

The heat-dissipating fins 300, as shown in FIG. 3, may be continuously formed in the shape of waves, or may be formed in other shapes known in the art, for example, in a zigzag pattern.

Further, the present invention may further include, as shown in FIG. 3, a drain guide 400.

The drain guide 400 is a part for preventing condensate water produced on the surfaces of the tubes 200 from being scattered by force from the fan.

That is, the drain guide 400 provides channels for cold air at sides of the tubes 200 and collects and drops the condensate water discharged with cold air, thereby preventing the cold air from being discharged with the cold air.

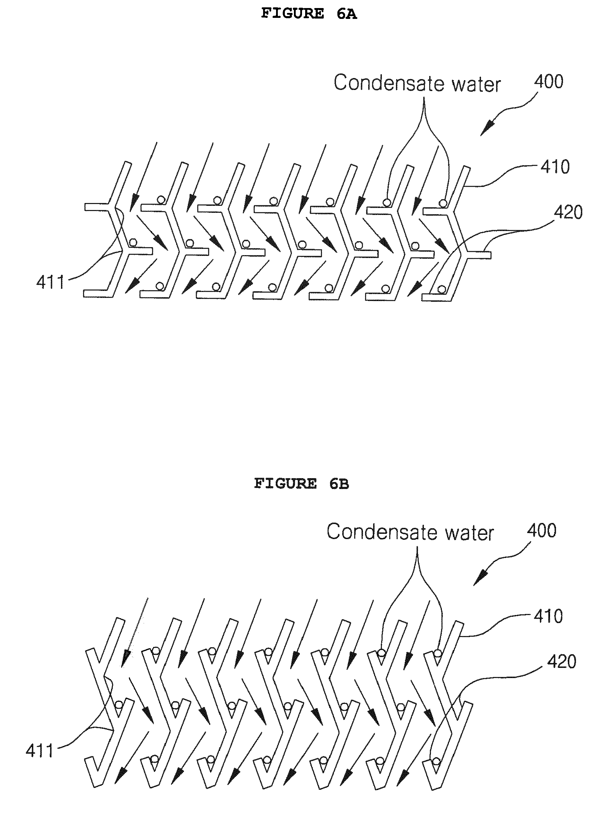

The drain guide 400, as shown in FIGS. 3 and 6, may include guide bodies 410 and baffle boards 420.

The guide bodies 410, as shown in FIG. 3, are formed in a plate shape and vertically disposed at sides of the tubes 200 with regular intervals, thereby providing channels, which are the spaces among them, for cold air.

The guide bodies 410 are separated in the figures, but they may be integrated by coupling members such as couplers (not shown) or may be fixed to the header pipes 100 or the reinforcing plate 150 of the evaporator by fixing members (not shown).

The fixing members for fixing the guide bodies 410 may be brackets or bolts (not shown), and the guide bodies 410 may be coupled in a hook type or a clamp type.

The guide bodies 410, as shown in FIGS. 6A and 6B, each have bending portions 511 in a zigzag pattern with inclined surfaces, so they can change the flow direction of cold air in a zigzag pattern.

Obviously, the guide bodies 410 may be formed in the shape of a flat plate without the bending portions 411.

The baffle boards 420 are parts that block cold air discharged through the channels formed by the guide bodies 410 and collect and drop condensate water in the cold air.

The baffle boards 420, as shown in FIGS. 6A and 6B, protrude on both sides of the guide bodies 410 alternately in the spaces among the guide bodies 410, thereby alternately blocking the cold air flowing through the spaces and separating condensate water from the cold air.

That is, the air supplied from the fan is cooled by exchanging heat with a coolant while passing through the tubes 200 and the heat-dissipating fins 400, and is discharged with the condensate water produced in the surfaces of the tubes 200 or the heat-dissipating fins 300 through the spaces among the guide bodies 410. The condensate water that is discharged with the cold air is separated from the cold air by hitting against the baffle boards 420 protruding in the spaces, and is then dropped along the baffle boards 420 and discharged to a specific drain.

The baffle boards 420, as shown in FIGS. 6A and 6B, may protrude at the bending portions of the guide bodies 410.

The baffle boards 420 may perpendicularly protrude, as shown in FIG. 6A, or may protrude at the same angle as the inclined surfaces of the guide bodies 410 at the bending portions 411.

Therefore, according to the evaporator of the present invention, as shown in FIG. 4, condensate water can be collected and dropped by the guide bodies 410 and the baffle boards 420 without scattering even through the tubes 200 are horizontally arranged, so the tubes 200 can be horizontally arranged. Accordingly, the heat transfer area can be increased, as compared with evaporators having the same size and capacity.

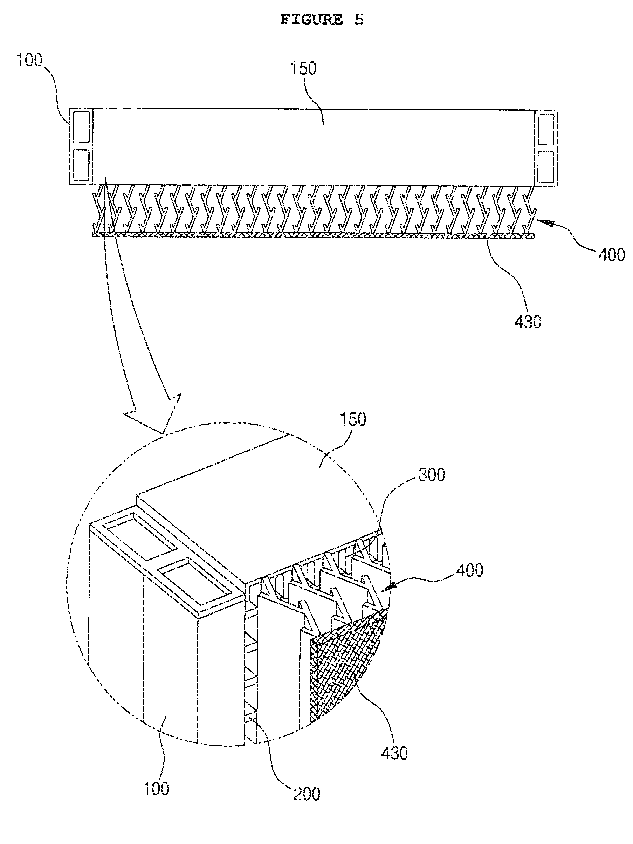

The drain guide 400 of the present invention, as shown in FIG. 5, may further include a condensate water filter 430.

The condensate water filter 430, as shown in the figures, is coupled to the exit ends of the guide bodies 410, covers the spaces among the guide bodies 410, that is, the channels for cold air, and filters the condensate water remaining in the cold air.

That is, the condensate water filter 430 prevents condensate water from scattering by filtering the condensate water that is discharged through the spaces among the guide bodies 410 without being separated by the baffle boards 420.

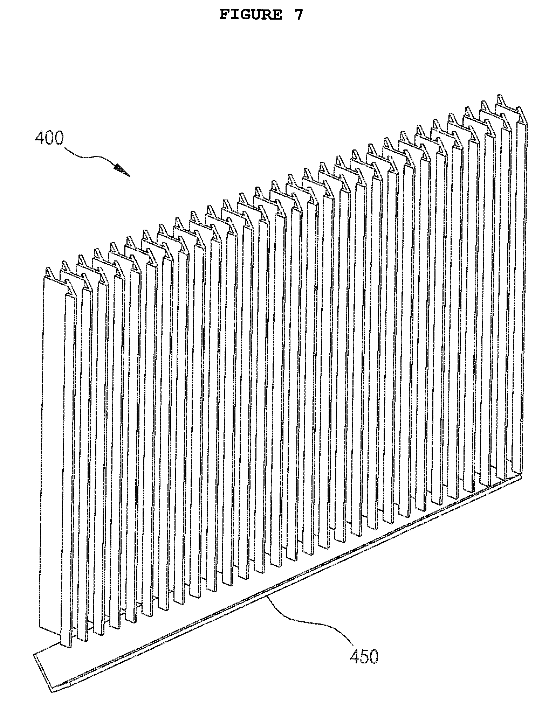

Further, the drain guide 400 of the present invention, as shown in FIG. 7, may further include a drain pan 450 under the guide bodies 410.

The drain pan 450 is disposed at an angle under the guide bodies 410 and collects and guides the condensate water dropped by the baffle boards 420 to an exit of the air conditioner.

As described above, according to the evaporator of the present invention, the header pipes 100 can be vertically arranged by preventing scattering of condensate water produced on the surfaces of the tubes 200 and the heat-dissipating fins 300. Therefore, a large heat transfer area can be achieved, as compared with evaporators that have the same size and in which header pipes are horizontally arranged, so it is possible to improve the efficiency of heat exchange.

The present invention was described with reference to the exemplary embodiments, but those are provided only for explanation and are not intended to limit the scope of the present invention. It will be understood to those skilled in the art that the present invention may be replaced, changed, and modified in various ways without departing from the spirit of the present invention.

## Claims

1. An evaporator having a vertical arrangement of header pipes for a vehicle air conditioner whereby the evaporator is connected to a cooling cycle of the air conditioner and provides cold air through heat exchange between a coolant flowing through the evaporator and air supplied by a fan, the evaporator comprising:
a pair of header pipes disposed to face each other with a gap therebetween, providing a circulation path for a coolant supplied in the cooling cycle, and discharging the coolant that has exchanged heat;
a plurality of tubes laterally arranged between the pair of header pipes to communicate with the header pipes, connected to each other in a longitudinal direction of the header pipes, and allowing a coolant flowing inside through inlets of the header pipes to exchange heat with air while flowing in a zigzag pattern toward outlets of the header pipes; and
heat-dissipating fins disposed among the tubes and dissipating heat of vaporization from the tubes while passing the air supplied from the fan,
wherein the header pipes are vertically disposed, the tubes are horizontally stacked, and the tubes are longer than the header pipes, thereby forming a rectangular shape.

2. The evaporator of claim 1, further comprising a drain guide disposed close to the tubes, opposite to the fan, and blocking and guiding down condensate water produced on surfaces of the tubes or the heat-dissipating fins and scattered away from the fan by force generated by the fan.

3. The evaporator of claim 2, wherein the drain guide includes:
guide bodies vertically disposed at sides of the tubes with regular intervals therebetween and providing channels for cold air passing by the tubes and the heat-dissipating fins through spaces among the guide bodies; and
baffle boards protruding on both sides of the guide bodies alternately in the spaces among the guide bodies and collecting and dropping condensate water included in cold air under the guide bodies by alternately blocking the cold air flowing through the spaces.

4. The evaporator of claim 3, wherein the guide bodies each have bending portions forming inclined surfaces in a zigzag pattern in a flow direction of the cold air and alternately change the flow direction of the cold air, and
the baffle boards protrude at the bending portions.

5. The evaporator of claim 4, wherein the baffle boards protrude at the same angle as the inclined surfaces formed by the bending portions of the guide bodies.

6. The evaporator of claim 3, wherein the drain guide further includes a condensate water filter fixed to exit ends of the guide bodies, covering exits of the channels, and filtering condensate water remaining in the cold air.
